(19) **Europäisches Patentamt**
**European Patent Office**
**Office européen des brevets**

(11) **EP 3 604 403 A1**

(12) **EUROPEAN PATENT APPLICATION**
published in accordance with Art. 153(4) EPC

(43) Date of publication:
**05.02.2020 Bulletin 2020/06**

(21) Application number: **18778141.4**

(22) Date of filing: **27.03.2018**

(51) Int Cl.:
*C08J 5/18* (2006.01)       *B29C 55/14* (2006.01)
*B32B 15/085* (2006.01)     *H01G 4/18* (2006.01)
*H01G 4/32* (2006.01)

(86) International application number:
**PCT/JP2018/012346**

(87) International publication number:
**WO 2018/181271 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2017   JP 2017067721**

(71) Applicant: **Toray Industries, Inc.
Tokyo 103-8666 (JP)**

(72) Inventors:
 • **IMANISHI, Yasuyuki
   Otsu-shi
   Shiga 520-8558 (JP)**

 • **OHKURA, Masatoshi
   Otsu-shi
   Shiga 520-8558 (JP)**
 • **OKADA, Kazuma
   Otsu-shi
   Shiga 520-8558 (JP)**
 • **NAKANISHI, Yuta
   Otsu-shi
   Shiga 520-8558 (JP)**

(74) Representative: **Prüfer & Partner mbB
Patentanwälte · Rechtsanwälte
Sohnckestraße 12
81479 München (DE)**

(54) **POLYPROPYLENE FILM, METAL MEMBRANE LAYERED FILM, FILM CAPACITOR, AND METHODS FOR MANUFACTURING THESE**

(57)    A polypropylene film having a film thickness of at least 05 μm and less than 10 μm, wherein: JIS-Rz of at least one direction, measured by cross-sectional analysis in three-dimensional non-contact surface shape measurement (VertSCAN), is 40-450 nm; Ra is 5-30 nm; and Rt is 50-500 nm. The present invention provides: a polypropylene film exhibiting high dielectric breakdown voltage even in high-temperature environments, whereby voltage resistance and reliability can be realized in a capacitor even in high-temperature environments; a metal membrane layered film and a film capacitor; and methods for manufacturing these.

**EP 3 604 403 A1**

**Description**

TECHNICAL FIELD

The present invention relates to a polypropylene film, metal layer laminated film , and film capacitor, as well as methods for the production thereof.

BACKGROUND ART

Having high transparency, good mechanical characteristics, good electric characteristics, and the like, polypropylene films have been applied in various fields including packaging materials, tape materials, and electric materials such as cable wrapping and capacitors.

In the field of capacitor production, in particular, these films have been preferred for high voltage capacitors, for both direct current and alternating current, because of their high voltage resistance and low loss characteristics.

In recent years, increasing numbers of electric devices have been replaced with inverter - based ones and accordingly, there are stronger demands for smaller -sized, larger-capacity capacitors. To meet demands in their markets, particularly for automobiles (including hybrid cars), photovoltaic power generators, and wind turbine generators, there are urgent demands for polypropylene film products that have improved dielectric breakdown voltage and further reduced thicknesses while maintaining high productivity and processability.

From the viewpoint of improvement in dielectric breakdown voltage, productivity, processability and heat resistance, these polypropylene films need to show high two-dimensional draw ratios and have appropriately designed surfaces with both moderate smoothness and lubricity. From the viewpoint of heat resistance, in particular, it is said that future SiC -based power semiconductors will have to work in environments of higher temperatures. For use in capacitors with further increased heat resistance and voltage resistance, there are demands for films with improved dielectric breakdown resistance that can function in high- temperature environments at above 110°C . However, as described in Non-patent document 1, it has been said that the upper limit of service temperature of polypropylene film s is about 110°C, and it has been very difficult to maintain a required dielectric breakdown voltage stably in such an environment.

To provide a technique for surface control of a polypropylene film, which is important for producing a thin polypropylene film that can serve to realize a capacitor having good withstand voltage such as high temperature withstand voltage under high voltage as well as security, some documents (for example, Patent document 1) have proposed the idea of increasing the dielectric breakdown voltage by appropriately adjusting the weight average molecular weight (Mw) and molecular weight distribution (Mw/Mn) and controlling the size of β-type spherulites, which is an important property in forming a crater -like surface profile, during the cast sheet production process. Furthermore, to provide techniques to control the crystallite size as a means of realizing increased heat resistance, some documents have proposed the idea of improving the dielectric breakdown voltage by developing a polypropylene film having an appropriately adjusted weight average molecular weight (Mw) and molecular weight distribution (Mw/Mn) and containing an organic nucleating agent (for example, Patent document 2) or a polypropylene film produced by blending two types of polypropylene resin that differ in weight average molecular weight (Mw) and molecular weight distribution (Mw/Mn) (for example, Patent document 3). In addition, to provide techniques to impart lubricity to films as a means of improving the productivity and processability, there are documents that have proposed a polypropylene film produced by blending a polypropylene resin with a polymethylpentene resin, which is different from the polypropylene resin, to create a surface having a structure with fine protrusions (for example, Patent document 4), or a polypropylene film with a controlled surface produced by preparing a layered structure of polypropylene resin and adding organic or inorganic particles to the surface layer (for example, Patent document 5). In the case of the polypropylene films described in Patent documents 1, 3, and 4, however, the polypropylene resins are not sufficiently high in stereoregularity and many bulky protrusions exist on the surface, in addition to fine protrusions, when β-type spherulites are formed, resulting in capacitors that are poor in voltage resistance in high temperature environments. The polypropylene film described in Patent document 2, furthermore, forms a smooth surface due to the influence of the nucleating agent and fails to form a capacitor having moderate gaps between film layers, and accordingly, self recovering function (self-healing) of the film will not occur in regions that suffer from dielectric breakdown, resulting in insufficient reliability in high temperature environments. In addition, the polypropylene film described in Patent document 5 has a highly smooth surface to serve effectively as surface protection film and has good slip properties, handleability, and windability because it contains stacked particles, but the film is so thick that, when used in capacitors, which required thin films, particles can act as insulation defects, possibly making it difficult to develop high voltage resistance performance.

PRIOR ART DOCUMENTS

PATENT DOCUMENTS

Patent document 1: Japanese Unexamined Patent Publication (Kokai) No. 2016-135891
Patent document 2: Japanese Unexamined Patent Publication (Kokai) No. 2015-201616
Patent document 3: Japanese Unexamined Patent Publication (Kokai) No. 2014-231584
Patent document 4: Japanese Unexamined Patent Publication (Kokai) No. 2014-114419
Patent document 5: International Publication WO 2017/022786

NON-PATENT DOCUMENTS

Non-patent document 1 : Motonobu Kawai" Firumu Kondensa Yakushin; Kuruma Kara Enerugi E (Remarkable Progress of Film Capacitors; from Automobiles to Energy) ", Nikkei Electronics, Nikkei Business Publications, Sep. 17, 2012, pp.57-62

SUMMARY OF INVENTION

PROBLEMS TO BE SOLVED BY THE INVENTION

Thus, an object of the present invention is to provide a polypropylene film that shows high dielectric breakdown voltages in high temperature environments and serves to produce a capacitor that shows high voltage resistance and reliability in high temperature environments metal layer laminated film, and film capacitor as well as methods for the production thereof.

MEANS OF SOLVING THE PROBLEMS

The present inventors have arrived at the present invention as a result of intensive studies aiming to solve the above problems. The present invention relates to a polypropylene film having a thickness of 0.5 $\mu$m or more and less than 10 $\mu$m and having a JIS-Rz, Ra, and Rt of 40 to 450 nm, 5 to 30 nm, and 50 to 500 nm, respectively, at least in one direction as determined by cross section analysis based on three dimensional noncontact surface profile measurement (VertSCAN).

ADVANTAGEOUS EFFECTS OF THE INVENTION

The present invention can provide a polypropylene film that shows high dielectric breakdown voltages in high temperature environments and serves to produce a capacitor that shows high voltage resistance and reliability in high temperature environments , metal layer laminated film, and film capacitor as well as methods for the production thereof.

DESCRIPTION OF PREFERRED EMBODIMENTS

The polypropylene film according to the present invention has a thickness of 0.5 $\mu$m or more and less than 10 $\mu$m and has a JIS-Rz, Ra, and Rt of 40 to 450 nm, 5 to 30 nm, and 50 to 500 nm, respectively, at least in one direction as determined by cross section analysis based on three dimensional noncontact surface profile measurement (VertSCAN). For the present invention, polypropylene film is occasionally referred to simply as film.

The polypropylene film according to the present invention has a film thickness of 0.5 $\mu$m or more and less than 10 $\mu$m to serve for producing thin heat-resistant film capacitors that are required in automobiles (including hybrid cars) etc., particularly those to be used in high temperature environments. It is preferably 0.6 $\mu$m or more and 8 $\mu$m or less, and more preferably 0.8 $\mu$m or more and 6$\mu$m or less, but when the film is used for production of a heat resistant film capacitor as described above, it is most preferably 0.8 $\mu$m or more and 4 $\mu$m or less from the viewpoint of the balance between characteristics and the capacitor size realized by thinning.

The polypropylene film according to the present invention has a JIS -Rz, Ra, and Rt of 40 to 450 nm, 5 to 30 nm, and 50 to 500 nm, respectively, at least in one direction as determined by cross section analysis based on three dimensional noncontact surface profile measurement (VertSCAN). The value of JIS -Rz is preferably 50 to 350 nm, and more preferably 60 to 250 nm. The value of Ra is preferably 8 to 25 nm, and more preferably 10 to 20 nm. The value of Rt is preferably 60 to 400 nm, and more preferably 70 to 300 nm. If the JIS-Rz is less than 40 nm, it can lead to an extremely large deterioration in slippage of the film, a decrease in handleability, or generation of creases, possibly resulting in inferior element processability. In addition, the resulting capacitor can suffer from a large change in capacity during continuous operation due to influence of creases etc., possibly leading to a decrease in reliability of the capacitor. If it is more than 450 nm, on the other hand, the film will be so slippery that element weaving can occur during capacitor processing. If the Ra is less than 5 nm, the entire surface of the film will be so slippery that capacitors produced by winding the film into rolls or stacking layers of the film will fail to work effectively due to a lack of appropriate gaps between film layers that leads to insufficient self-healing and decreased capacitor reliability. If the Ra is more than 30 nm, on the other hand, the entire film surface will fail to have moderate smoothness and capacitors produced can occasionally suffer from deterioration in voltage resistance. If the Rt is less than 50 nm, the film will suffer from an extremely large decrease in slippage, possibly leading to easy generate of creases during element processing. In addition, the resulting capacitor can suffer from a large change in capacity during continuous operation due to influence of creases etc., possibly leading to a decrease in reliability of the capacitor. If it is more than 500 nm, on the other hand, bulky protrusions will be formed in places on the film surface, possibly leading to capacitors that can suffer from short circuits as a result of concentration of electric charges on these bulky protrusions.

As a result of intensive studies, the present inventors focused on the idea of controlling the surface roughness by forming extremely smooth portions and protrusion-containing portions moderately over the surface of polypropylene film. Specifically, they found that appropri ate control of the surface roughness serves to achieve smooth slippage between film layers or between the film and conveyor rollers and realize high processability during capacitor element production and high uniformity of interlaminar gaps between film layers in capacitors produced by winding or stacking layers of the film and, in particular, develop high voltage capacitors having high voltage resistance and reliability in high temperature environments. Here, controlling the JIS -Rz, Ra, and Rt at least in one direction on the surface of a polypropylene film in the range described above can be achieved by using a polypropylene material having a high mesopentad fraction, controlling the conditions, such as the cooling temperature for cooling and solidification of molten sheets, in a preferred range, and controlling the rubbing treatment conditions in a preferred range. The term "one direction on the polypropylene film " referred to above may be the direction corresponding to the flow direction in the polypropylene film production step, that is, the machine direction (hereinafter occasionally referred to as MD), the direction perpendicular to the flow direction in the film production step, that is, the transverse direction (hereinafter occasionally referred to as TD), or any direction shifted by an angle smaller than 90° on the arc.

For the polypropylene film according to the present invention, rubbing treatment means physical rubbing of the surface of the material under treatment (that is, polypropylene film in the case of the present invention) using cloth or a brush. There are no specific limitations on the step for subjecting the film surface to rubbing treatment and in the case of a biaxially stretched film, for example, rubbing of an unstretched film m ay be performed before stretching; rubbing may be performed after stretching in one direction; rubbing may be performed after biaxial stretching and before winding -up; or rubbing may be performed as post-processing after winding -up. To allow the polypropylene film according to the present invention to develop a surface roughness as described above, it is particularly preferable to subject the unstretched sheet to rubbing treatment followed by biaxial stretching because the stretching step can serve to produce surface protrusions densely and uniformly.

For a capacitor produced from the polypropylene film according to the present invention, a reduction in crystallite size serves to decrease the leakage current flowing in amorphous parts of the film, particularly in a high temperature environment, and prevent a capacity deterioration, short -circuit breakage, voltage resistance deterioration, etc., due to temperature rise caused by self-heating of the capacitor, to ensure improved reliability, and from this point of view, it is preferable for the crystallite size to be 12.0 nm or less. It is more preferably 11.5 nm or less, still more preferably 11.0 nm or less, and most preferably 10.5 nm or less. From the viewpoint described above, it is preferable for the crystallite size to be as small as possible, but practically 9 nm is the lower limit. The crystallite size can be controlled by, for example, using a polypropylene material having a high mesopentad fraction, which will be described later, controlling the conditions, such as the cooling temperature for cooling and solidification of molten sheets, in a preferred range.

The polypropylene polymer used for the polypropylene film according to the present invention preferably has a cold xylene soluble (hereinafter CXS) fraction of 4 mass% or less. If this requirement is not met, the polymer may be inferior in film production stability, may suffer from the formation of voids when processed into biaxially stretched film, or may suffer from a larger decrease in dielectric breakdown voltage.

Here, the cold xylene soluble (CXS) fraction is determined by completely dissolving the film in xylene, then performing precipitation at room temperature, and identifying the polypropylene components dissolved in the xylene, which are considered to be low in crystallizability because of, for example, low stereoregularity or low molecular weight. A film of resin that contains these components in large amounts can have problems such as a decrease in dielectric breakdown voltage and an increase in leakage current. Accordingly, the CXS fraction is preferably 4 mass% or less, more preferably 3 mass% or less, and particularly preferably 2 mass% or less. A polypropylene polymer having such a CXS fraction can be pro duced by preparing a resin with enhanced catalytic activity or by washing the resulting resin with a solvent or the propylene monomer itself.

The polypropylene polymer used for the polypropylene film according to the present invention preferably has a melt flow rate (MFR) of 1 to 10 g/10 min (230°C, 21.18 N load), more preferably 2 to 5 g/10 min (230°C, 21.18 N load) from the viewpoint of film forming property. Control of the melt flow rate (MFR) in the above range is realized by, for example, controlling the average molecular weight and molecular weight distribution.

The polypropylene polymer used for the polypropylene film according to the present invention is composed mainly of a propylene homopolymer, but may contain other unsaturated hydrocarbon based copolymerization components or may be blended with a polymer that is not a propylene homopolymer, unless they impair the purposes of the present invention. Useful copolymerization components and useful monomer components for such blending include, for example, ethylene, propylene (for copolymerized blends), 1- butene, 1-pentene, 3-methylpentene-1,3-methylbutene-1,1-hexene, 4- methylpentene-1,5-ethylhexene-1,1 - octene, 1- decene, 1- dodecene, vinyl cyclohexene, styrene, allyl benzene, cyclopentene, norbornene, and 5-methyl-2-norbornene. In regard to the copolymerization rate and blending rate, the copolymerization rate is preferably less than 1 mol% and the blending rate is preferably less than 1 mass% from the viewpoint of dielectric breakdown voltage and heat resistance.

It is preferable that the polypropylene film according to the present invention is substantially composed only of a polypropylene homopolymer. Being substantially composed only of a polypropylene homopolymer as mentioned herein means that the thermoplastic resin components other than polypropylene account for less than 0.1 mass%, that the crystal nucleating agents and organic or inorganic particles account for less than 0.01 mass%, and that the branched chain polypropylene components account for less than 0.05 mass%.

It is preferable that the polypropylene film according to the present invention has a crystallization temperature Tmc of 121°C or less as determined by DSC. The Tmc is more preferably 118°C or less, still moe preferably 115°C or less, and particularly preferably 112°C or less. If the Tmc of the polypropylene film is more than 121°C, the crystallization will be so high in some cases that the development of a mesomorphic phase in the unstretched sheet is inhibited, probably resulting in a decrease in the film's dielectric breakdown voltage in high temperature environments. From the viewpoint of depressing the formation of crystal nuclei that can accelerate crystallization, it is preferable to avoid the addition of a crystal nucleating agent or a long-chain branched polypropylene.

The polypropylene component used in the polypropylene film according to the present invention may also contain various additives such as crystal nucleating agent, antioxidant, thermal stabilizer, chlorine capturing agent, lubricant, antistatic agent, antiblocking agent, filler, viscosity adjustor, and color protection agent, unless they impair the purposes of the present invention.

If an antioxidant is to be used in particular, it is important to identify the appropriate type and quantity from the viewpoint of long term heat resistance. More specifically, the antioxidants to be used are preferably phenolic ones with steric hindrance and at least one of those used is preferably of a high molecular weight type with a molecular weight of 500 or more. A variety of examples thereof can be given, but it is preferable to use, for example, 2,6- di-t-butyl-p-cresol (BHT: molecular weight 220.4) in combination with 1,3,5- trimethyl-2,4,6-tris-(3,5-di-t-butyl-4-hydroxybenzyl) benzene (for example, I rganox (registered trademark) 1330, manufactured by BASF, molecular weight 775.2) or tetrakis [methylene- 3(3,5-di-t-butyl-4-hydroxyphenyl) propionate] methane (for example, Irganox (registered trademark) 1010, manufactured by BASF, molecular weight 1177.7). The total content of these antioxidants is preferably in the range of 0.03 to 1.0 mass% of the total quantity of polypropylene. The long term heat resistance may deteriorate if the antioxidant content is too small. If the antioxidant content is too large, bleed- out of these antioxidants may occur to cause blocking at high temperatures, possibly having an adverse influence on capacitor element . The content is more preferably 0.1 to 0.9 mass%, particularly preferably 0.2 to 0.8 mass%.

The polypropylene film according to the present invention preferably contains a polypropylene resin having a mesopentad fraction of 0.96 or more. It is more preferably 0.97 or more, and still more preferably 0.98 or more. The mesopentad fraction is an indicator that represents the stereoregularity of the crystalline phase of the polypropylene measured by nuclear magnetic resonance analysis (NMR analysis) and larger values suggest higher degrees of crystallinity and higher melting points, which are preferable because the dielectric breakdown voltage in a high temperature environment can be increased. There are no specific limitations on the upper limit of the mesopentad fraction. Thus, in order to obtain a polypropylene film having a high mesopentad fraction, it is appropriate to use a polypropylene resin prepared by, for example, a method that uses a so- called Ziegler -Natta catalyst containing a suitable electron donor component. In the case of a polypropylene film having a mesopentad fraction of less than 0.96, the polypropylene is so low in regularity that the film's strength and dielectric breakdown voltage in high temperature environments may decrease and the film may be broken during its conveyance in a step for vapor deposition to form a metal film or a step for winding up a capacitor element.

From the viewpoint of increasing the crystallinity and improving the dielectric breakdown voltage in high temperature environments, it is preferable for the polypropylene resin used for the present invention to have a melting point of 163°C or more, more preferably 165°C or more, and still more preferably 167°C or more. If the melting point is less than 163°C , the crystallinity is so low that the film's dielectric breakdown voltage in high temperature environments may decrease and the film may be broken during its conveyance in a step for vapor deposition to form a metal film or a step for winding up a capacitor element.

From the viewpoint of increasing the element processability and improving the voltage resistance while maintaining a smooth surface, at least one surface of the polypropylene film according to the present invention has a glossiness of 130% or more and less than 150%. If the glossiness is less than 130%, the density of light scattering at the film surface is so excessively large that the surface may be rough in some cases, possibly leading easily to a decrease in dielectric breakdown voltage. If the glossiness is 150% or more, on the other hand, it means that the surface is excessively smooth, possibly leading easily to an extremely large deterioration in slippage of the film. Accordingly, it can occasionally cause a decrease in handleability or generation of creases, possibly resulting in inferior element processability. The aforementioned glossiness is more preferably 135% or more and less than 149%, and still more preferably 140% or more and less than 148%. Here, controlling the glossiness in the aforementioned preferable range can be achieved by using a polypropylene material having a high mesopentad fraction, controlling the conditions, such as the cooling temperature for cooling and solidification of molten sheets, in a preferred range, and controlling the rubbing treatment conditions in a preferred range.

From the viewpoint of ensuring a high voltage resistance and reliability in high temperature environments, it is preferable for the polypropylene film according to the present invention to have a dielectric breakdown voltage at 125°C of 460 V/$\mu$m or more, more preferably 510 V/$\mu$m or more, and still more preferably 560 V/$\mu$m or more. Though there is no specific upper limit, the common range is about 900 V/$\mu$m. If the dielectric breakdown voltage at 125°C is less than 460 V/$\mu$m, it occasionally leads to a capacitor that suffers from short-circuit breakage that can cause a deterioration in the voltage resistance and a decrease in reliability. Controlling the dielectric breakdown voltage at 125°C in the aforementioned range can be achieved by, for example, controlling the film's material components in preferred ranges as described later, using a polypropylene material having a high mesopentad fraction, controlling the conditions, such as the cooling temperature for cooling and solidification of molten sheets, in a preferred range, and controlling the rubbing treatment conditions in a preferred range.

From the viewpoint of increasing the element processability while improving the voltage resistance, the coefficient of static friction ($\mu$s) between two layers of the polypropylene film according to the present invention is preferably 0.1 or more and less than 1.5. If $\mu$s is less than 0.1, the film may be so slippery that weaving can occur during winding in a film forming step or during element processing. If $\mu$s is more than 1.5, an extremely large deterioration will occur in the slippage of the film, leading to a decrease in handleability, generation of creases, or deterioration in element processability. Thus, $\mu$s is more preferably 0.1 or more and 1.2 or less, still more preferably 0.3 or more and 1.0 or less, and most preferably 0.5 or more and 0.9 or less.

From the viewpoint of obtaining a capacitor having high reliability in high temperature environments, it is preferable that when the polypropylene film according to the present invention is heat-treated at 130°C for 10 minutes, sum of heat shrinkage in the width and longitudinal directions is 5.0% or less. For the polypropylene film according to the present invention, the aforementioned sum of heat shrinkage is more preferably 4.5% or less, and still more preferably 4.0% or less. There are no specific limitations on the lower limit, but it should be 1.0% because the wound element may loosen due to the heat applied when producing or using the capacitor. If the aforementioned sum of heat shrinkage is more than 5.0%, the film itself may suffer from shrinkage due to the heat applied when producing or using the capacitor, possibly leading to deterioration in voltage resistance as a result of poor contact with the metallikon at the end of the element or causing a capacity deterioration, short-circuit breakage, etc., due to tight winding of the element.

From the viewpoint of the control of the surface roughness and improvement in the voltage resistance, the polypropylene film according to the present invention is preferably one that is prepared by stretching of an unstretched polypropylene film having a mesomorphic phase structure at a draw ratio of 2 or more at least in one direction. Stretching at a draw ratio of 2 or more at least in one direction works to stretch molecular chains to form an oriented structure, leading to a film having improved mechanical characteristics and a capacitor having improved voltage resistance and reliability in high temperature environments. From this point of view, the draw ratio is preferably 4.6 or more, more preferably 5.0 or more, and still more preferably 5.6 or more, at least in one direction. There are no specific limitations on the upper limit, but it should be 15 from the viewpoint of stable film production. It is desirable for the aforementioned mesomorphic phase structure to be formed while the polypropylene film is still in an unstretched state. Here, a mesomorphic phase is an intermediate state between crystal and amorphous, and it forms specifically when a molten material is solidified at a very high cooling speed. It is generally known that spherulites grow when polypropylene is crystallized. When a crystallized unstretched polypropylene film is stretched, the amorphous portions remaining among the spherulites will receive varying degrees of stretching stress, leading to local unevenness in stretching and a decreasing tendency in voltage resistance. On the other hand, a mesomorphic phase structure will not undergo spherulite growth and will be free of uneven stretching, leading to a good voltage resistance feature. Crystal growth should be depressed if efficient formation of mesomorphic phase structures is required in an unstretched polypropylene film, but polypropylene tends to undergo very fast crystallization when cooled from a molten state. When using a homopolypropylene with high stereoregularity, in particular, very fast crystallization will occur to impede the formation of mesomorphic phase structures. In general, therefore, such techniques as using a polypropylene with a small mesopentad fraction and using a copolymer such as propyleneethylene copolymer are adopted in order to depress the crystal growth. The use of these techniques, however, can sometimes lead to a film having deteriorated mechanical characteristics in high temperature environments or suffering from increased heat shrinkage. Effective crystal growth hindrance methods for the present invention include, for example, controlling the casting drum temperature at 40°C or less, adjusting the unstretched polypropylene film to 300 $\mu$m or less, applying cool air to the unstretched polypropylene film on the casting drum to enhance the cooling efficiency, and adjusting the lip of the nozzle to a temperature higher than that of the upstream short pipe to control the crystal growth. It is inferred that raising the temperature of the lip of the nozzle can work effectively because the friction between the polymer and the lip is reduced to impede the crystallization caus ed by shearing.

The polypropylene film according to the present invention is preferred as dielectric film for capacitors, though not limited to any specific capacitor type. Specifically, in regard to the electrode structure, it can be applied to co mbined metal foil/film wound capacitors, metal vapor deposited film capacitors, oil impregnated capacitors, which are impregnated with insulating oil, and dry capacitors, which are completely free of insulating oil. In view of its characteristics, however, the film according to the present invention is particularly preferred for use as a component of metal vapor deposited film capacitors. In regard to the shape, they may be of a wound type or of a laminated type.

Polypropylene film is commonly small in surface energy and difficult to treat stably for metal deposition and therefore, it is preferable to subject it to surface treatment before metal deposition in order to increase the metal adhesion strength. Specific examples of such surface treatment include corona discharge treatment, plasma treatment, glow treatment, and flame treatment. Commonly, polypropylene film has a surface wetting tension of around 30 mN/m, but in order to ensure strong adhesion to metal film and high level of security , it is preferable to perform these surface treatment techniques to achieve a surface wetting tension of about 37 to 75 mN/m, more preferably about 39 to 65 mN/m, and most preferably about 41 to 55 mN/m.

The polypropylene film according to the present invention can be produced by using a material having characteristics as described above and subjecting it to biaxial stretching, heat treatment, and relaxation treatment. Useful biaxial stretching methods include inflation type simultaneous biaxial stretching, tenter type simultaneous biaxial stretching, and tenter type sequential biaxial stretching, of which the tenter type sequential biaxial stretching technique is preferred from the viewpoint of the control of the film's production stability and control of crystal/amorphous structures, surface characteristics, mechanical characteristics, and thermal dimensional stability.

Described next is the production method for the polypropylene film according to the present invention. First, polypropylene resin is melt-extruded on a support to prepare an unstretched polypropylene film. This unstretched polypropylene film is stretched in the longitudinal direction and then stretched in the width direction to achieve sequential biaxial stretching. Subsequently, heat treatment and relaxation treatment are performed to prepare a biaxially orientated polypropylene film. It is particularly preferable that in this step, the unstretched polypropylene film having a mesomorphic phase structure is subjected to rubbing treatment before biaxial stretching. A more detailed description will be given later, but the invention is not limited the above steps.

First, polypropylene resin is melt -extruded from a single screw extrude, passed through a filter, and extruded through a slit -like nozzle at a temperature of 230°C to 280°C, more preferably 230°C to 260°C. The molten sheet extruded from the slit -like nozzle is solidified on a casting drum (cooling drum) adjusted to a temperature of 10°C to 110°C to provide an unstretched polypropylene film.

The unstretched polypropylene film preferably has a mesomorphic phase structure and the mesomorphic fraction is preferably 20% or more, more preferably 40% or more, still more preferably 70% or more, most preferably 80% or more, and still most preferably 90% or more. Here, the mesomorphic fraction in an unstretched polypropylene film is determined by calculation based on an X-ray diffraction profile obtained by observing the polypropylene film by wide angle X-ray diffraction. The X-ray diffraction profile obtained is processed using a computer program for peak separation and separated into mesomorphic, $\alpha$-crystal, and amorphous profiles, which are then used to calculate the mesomorphicfraction. For the present invention, the expression "forming a mesomorphic phase" or "having a mesomorphic phase structure" means that the mesomorphic fraction is 20% or more. A diffraction profile attributed to $\alpha$-crystal is obtained from wide angle X-ray diffraction observation in the diffraction angle ($2\theta$)range of 10° to 30° and contains five peaks at around 14.1°, 16.9°, 18.6°, 21.6° and 21.9°. A diffraction profile attributed to a mesomorphic phase contains two broad peaks at around 15° and 21°. A diffraction profile attributed to amorphous material contains a broad peak around a diffraction angle of 16.2° and it is obtained by observing molten polypropylene by wide angle X-ray diffraction.

Useful methods to bring the molten sheet into firm contact with the casting drum include the application of static electricity, use of surface tension of water, air knife method, press roll method, casting into water, and air chamber method, of which the use of the air knife method is preferred because it can produce a highly planar surface and control the surface roughness. Furthermore, it is preferable for the position of the air knife to be adjusted appropriately so that air will flow downstream of the film, thereby preventing vibration of the film.

From the viewpoint of providing a biaxially stretched film having improved mechanical characteristics, improved electric characteristics, a small controlled crystallite size, or a surface with a higher glossiness, it is more preferable for the casting drum to have a temperature of 10°C to 90°C, still more preferably 10°C to 60°C, and most preferably 10°C to 30°C. In particular, if the casting drum temperature is controlled at 10°C to 30°C, it serves to increase the mesomorphic phase fraction of the unstretched polypropylene film to allow the unstretched polypropylene film to have a mesomorphic phase structure.

From the viewpoint of producing dense fine protrusions uniformly on the surface of a biaxial stretched film, it is preferable to subject the unstretched polypropylene film to rubbing treatment, and it is particularly preferable to subject the unstretched polypropylene film having a mesomorphic phase structure to rubbing treatment. Rubbing treatment is carried out by pressing a rubbing roller, which has rubbing cloth or rubbing brush wound on it. In this step, the rubbing roller may be stationary or rotating, but it is preferable for it to be rotating from the viewpoint of achieving a higher treatment density and producing fine protrusions uniformly over the film surface. The direction of treatment may be the film's running direction (MD), the direction perpendicular thereto (TD), or an oblique direction. There are no specific limitations on the number of times of rubbing treatment runs, and it may be performed only once or repeated two or more times as required. The strength of rubbing may be controlled appropriately by adjusting the length and fiber diameter of the rubbing cloth or rubbing brush that is in contact with the film surface, rotating speed of the rubbing roller, conveyance speed of the film, temperature of the film surface, and the like. Here, in regard to the surface temperature of the film, the rollers used for film conveyance may be heated to perform treatment of the film that is traveling on the rollers, thereby permitting treatment at a desired film surface temperature. The surface temperature of the film under rubbing treatment is preferably 25°C to 135°C, more preferably 25°C to 115°C, still more preferably 25°C to 95°C, and most preferably 25°C to 75°C.

Suitable materials to use for the rubbing cloth include cellulose acetate, cotton, rayon, polyamide, acrylic, and aramid. The rubbing cloth is preferably in the form of nonwoven fabric, pile-woven fabric, or velvet. Available materials for the rubbing brush include resin fibers and natural fibers, and the resin fibers include polypropylene, nylon, polyphenylene sulfide, and conductive fiber formed of nylon fiber processed with carbon powder, whereas the natural fibers include pig bristles, horsehair, goat hair, Paquin, fern, and palm. Of these, the use of nylon resin fiber is particularly preferred because of high durability, wear resistant, and flexibility of the brush, the ability to rub only the outermost surface layer without causing a significant loss of the film's surface resin to allow the high voltage resistance to be maintained, and the ability to form a capacitor having high voltage resistance performance. In regard of the form of the rubbing brush, the use of a channel roll type brush is preferred.

Then, the unstretched polypropylene film is stretched biaxially to achieve biaxial orientation. For the polypropylene film according to the present invention, it is particularly preferable to subject the unstretched sheet to rubbing treatment and then perform biaxial stretching of the resulting film because it serves to produce dense fine protrusions uniformly over the film surface. The unstretched polypropylene film is preheated by passing it between rolls maintained at 70°C to 150°C, preferably 80°C to 140°C, and then the unstretched polypropylene film is stretched 2 to 15 times, preferably 4.5 to 12 times, and more preferably 5.5 to 10 times, in the longitudinal direction while maintaining the temperature at 70°C to 150°C, preferably 80°C to 140°C, followed by cooling to room temperature. In the case where the unstretched polypropylene film has a mesomorphic phase fraction of 20% or more, in particular, it is preheated by passing it between rolls maintained at 80°C to 130°C, preferably 90°C to 120°C , and then the unstretched polypropylene film is stretched 2 to 15 times, preferably 4.6 to 12 times, more preferably 5.0 to 11 times, and most preferably 5.6 to 10 times, in the longitudinal direction while maintaining the temperature at 80°C to 130°C, preferably 90°C to 120°C, followed by cooling to room temperature.

Subsequently, the film uniaxially stretched in the longitudinal direction is conveyed into a tenter with the film edges held by clips, and it is stretched 7 to 15 times, more preferably 9 to 12 times, and most preferably 9.2 to 11.5 times, in the transverse direction at a temperature (transverse stretching temperature) of 140°C to 170°C, preferably 145°C to 160°C.

Here, from the viewpoint of improvement in voltage resistance, the area draw ratio is preferably 50 or more. For the present invention, the area draw ratio is the product of the draw ratio in the machine direction and that in the transverse direction. The area draw ratio is more preferably 55 or more, and particularly preferably 60 or more.

For the present invention, from the viewpoint of ensuring improvement in film thickness, uniformity of the surface profile, and thermal dimensional stability and realizing a capacitor that is high in voltage resistance and reliability, it is preferable for the subsequent heat treatment and relaxation treatment step to contain multi -stage heat treatment that is carried out as follows: the film, tensioned by clips in the transverse direction, i s subjected to heat fixation (first stage heat treatment) at a temperature (first stage heat treatment temperature) of 145°C or more and 165°Cor less while relaxing it by 2% to 20% in the transverse direction, and then the film, tensioned by clips in the transverse direction, is subjected to heat treatment (second stage heat treatment) at a temperature of 130°C or more and less than the above heat fixation temperature (first stage heat treatment temperature), followed by subjecting the tensioned film to heat fixation (third stage heat treatment) at a temperature of 80°C or more and less than the above heat fixation temperature (second stage heat treatment temperature).

In the relaxation treatment step, the relaxation rate is preferably 2% to 20%, more preferably 5% to 18%, and still more preferably 8% to 15%, from the viewpoint of ensuring increased thermal dimensional stability. If it is more than 20%, the film may be relaxed excessively in the tenter, possibly leading to products suffering from creases, uneven metal deposition, deterioration in mechanical characteristics, etc., whereas if the relaxation rate is less than 2%, a sufficiently high heat dimensional stability may not be achieved, possibly leading to capacitors that suffer from a decrease in capacity, short -circuit breakage, etc., in a high temperature environment.

After the multi-stage heat treatment, the film is conveyed out of the tenter, released from the clips holding the film edges in a room temperature atmosphere, and sent to the wind-up step where the film is wound into a film roll product, which has a thickness of 0.5 $\mu$m or more and less than 10 $\mu$m, after cutting off the film edges. Here, before winding up the film, the surface on which metal is to be deposited is preferably subjected to corona discharge treatment in air, nitrogen, carbon dioxide gas, or a mixture thereof in order to ensure good adhesion with deposited metal.

Here, particularly important production conditions for obtaining the polypropylene film according to the present invention are described below.

- The biaxially stretched film has a film thickness of 0.5 $\mu$m or more and less than 10 $\mu$m.
- The unstretched film has already undergone rubbing treatment.

In addition, it is more preferable that the requirements given below are met.

- The unstretched polypropylene film has a mesomorphic phase structure and already undergone rubbing treatment.
- The area draw ratio is 50 or more.
- The heat treatment and relaxation treatment that follow the biaxial stretching step are carried out in a multi-stage step that includes the first to third stages described below.
- The first-stage heat treatment is performed at a temperature of 145°C or more and 165°C or less.
- The second-stage heat treatment is performed at a temperature of 130°C or more and less than the first-stage heat treatment temperature.
- The third-stage heat treatment is performed at a temperature of 80°C or more and less than the second-stage heat treatment temperature.
- Relaxation treatment of 2% to 20% in the transverse direction is performed during the first-stage heat treatment.

Described next are a metal layer laminated film made from the polypropylene film according to the present invention, a film capacit or made therefrom, and methods for the production thereof.

The metal layer laminated film according to the present invention includes a polypropylene film according to the present invention that has a metal layer formed at least on one surface thereof.

The metal layer laminated film production method according to the present invention includes a metalization step in which a metal layer is formed on at least one surface of a polypropylene film produced by the aforementioned polypropylene film production method.

For the present invention, there are no specific limitati ons on the metalization step in which a metal layer is formed at least on one surface of the aforementioned polypropylene film to produce a metal layer laminated film , but for example, a preferred metal layer formation method is to deposit aluminum or an alloy of aluminum and zinc on at least one side of a polypropylene film to provide a metal layer such as a vapor deposited film that serves as an internal electrode of a film capacitor. In this instance, another metal component such as, for example, nickel, copper, gold, silver, and chromium, may be deposited simultaneously with or subsequent to the aluminum deposition. In addition, a protective layer of oil etc. may be formed on the vapor deposited film. In that case where the polypropylene film has surfaces that differ in roughness, it is preferable to form a metal layer on the surface having a smaller roughness to metalize the film in order to ensure a higher voltage resistance.

For the present invention, the metal layer formation step may be followed, as required, by annealing treatment or heat treatment of the metal layer laminated film at a specific temperature. For insulation or other purposes, furthermore, at least one surface of the metal layer laminated film may be coated with, for example, polyphenylene oxide.

The film capacitor according to the present invention includes a metal layer laminated film according to the present invention.

Furthermore, the film capacitor production method according to the present invention uses a metal layer laminated film produced by the metal layer laminated film production method according to the present invention.

For example, a film capacitor according to the present invention can be produced by stacking or winding layers of the metal layer laminated film according to the present invention by one of various available methods. A preferred method for producing a wound type film capacitor is described below.

Aluminum is deposited on one side of a polypropylene film under reduced pressure. In this step, deposition is provided in a stripe- like form having margins running in the longitudinal direction. A knife is put into the center of each metal deposited area and the center of each marginal space to slit the film to produce reels of tape having a marginal space along one edge of the surface. Thus, reels of tape each having a marginal space along either right - or left-hand edge are obtained. The tape with a margin on the left-hand edge and the tape with a margin on the right-hand edge are put one on top of the other in such a manner that each metal deposited area sticks out of the marginal space in the width direction, and then they are wound up to provide a roll.

In the case where metal is deposited on both surfaces, one surface is metalized in a stripe - like form so that margins run in the longitudinal direction while the other surface is metalized in a stripe-like form so that a margin runs in the longitudinal direction along the center of the metalized area on the former surface. Then, a knife is put into the center of each marginal space on each surface to slit the film t o provide reels of tape each having a margin along either edge of each surface (for example, a margin on the right-hand side of a surface and a margin on the left-hand side of the other surface). One of the resulting reels is combined with deposit-free composite film in such a manner that the metal layer laminated film sticks out of the composite film in the width direction, and then they are wound up to provide a roll.

After removing the core, the wound-up roll thus prepared is pressed and an external electrode is formed by thermal metal spraying to each end face, followed by welding a lead wire to each external electrode to provide a wound-up type film capacitor. Film capacitors have been used in a variety of fields including railroad vehicles, automobiles (hybrid cars, electric vehicles), photovoltaic power generators, wind power generators, and general home electric appliances, and the film capacitor according to the present invention can also be applied favorably to these uses. It can also be used in other various applications such as packaging films, release films, process films, sanitary articles, agricultural articles, building articles, medical supplies, and the like.

The methods for measuring characteristic values and the methods for evaluation of effects used for the present invention are as described below.

(1) Thickness of film

Thickness measurements were taken at 10 randomly selected positions on a polypropylene film sample in a 23°C and 65%RH atmosphere using a contact type electronic micrometer (model K -312 A) manufactured by Anritsu Corporation. Their average of the thickness measurements taken at 10 positions was adopted as the thickness of the polypropylene film.

(2) Cross-sectional analysis of three dimensional noncontact surface profile measurement (VertSCAN): JIS-Rz, Ra, and Rt

A white light interferometer (VertScan 2.0 R5300 GL- Lite-AC, manufactured by Ryoka Systems, Inc.) was used for taking measurements, followed by performing planar correction of the photographed image by a polynomial quartic approximation technique using the attached analysis program and subsequently performing interpolation processing (for pixels lacking height data, corrections were made by calculation from height data of surrounding pixels). Then, cross -sectional cursors were set at appropriate positions on the observed screen to provide a cross -sectional profile and cross -sectional roughness parameters (JIS-Rz, Ra, and Rt). Measurements were taken (n = 5) from a rubbed surface and their average was adopted as the JIS-Rz, Ra, and Rt values of that surface. In the case of a film not having undergone rubbing treatment or not known to have a rubbed surface, measurements were taken from both surfaces (n = 5) and averaged to give JIS-Rz, Ra, and Rt values of each surface, and the average values of the surface having the larger Ra were adopted. Measuring conditions used were as described below.

Manufacturer: Ryoka Systems, Inc.
Name of equipment: VertScan 2.0 R5300 GL-Lite-AC
Measuring conditions: CCD camera SONY HR-57 1/2 inch (1.27 cm)
Objective lens: x10
Intermediate lens: x0.5
Wavelength filter 520 nm white
Measuring mode: Phase
Measuring software: VS-Measure Version 5.5.1
Analysis software: VS-Viewer Version 5.5.1
Measuring area: $1.252 \times 0.939$ mm$^2$

(3) Crystallite size

A polypropylene film sample was cut to provide strips each having a length of 40 mm and a width of 1 mm, which were stacked to a thickness of 1 mm to prepare a specimen. An X-ray beam was applied in the perpendicular direction to the MD -ZD cross section of the film specimen, and the half-width βe of the crystal peak at 2θ = about 17° (a-crystal (040) plane) was used for calculations made by the Equations (1) and (2) given below.

[Formula 1]

$$\text{Crystallite size} = \frac{K\lambda}{\beta \cos\theta} \quad \cdots(1)$$

[Formula 2]

$$\beta = \sqrt{\beta_e^2 + \beta_0^2} \quad \cdots(2)$$

Here, $\lambda$ is the X-ray wavelength (= 0.15418 nm); $\beta_e$ is the half-width of the diffraction peak; $\beta_o$ is the corrected half-width (= 0.6 (transmission $2\theta$-$\theta$ scanning) and 0.13 (reflection $2\theta$-$\theta$ scanning)); and K is the Scherrer constant (=1.0 (transmission $2\theta$-$\theta$ scanning) and 0.9 (reflection $2\theta$-$\theta$ scanning)).

(Measuring apparatus)

- X-ray diffraction equipment: model 4036 A2, manufactured by Rigaku Corporation
  X -ray source: CuK$\alpha$ ray (Ni filter used)
  Output: 40 kV - 30 mA
- Goniometer: model 2155D, manufactured by Rigaku Corporation
  Slit: 2 mm diameter - 1°-1°
  Detector: scintillation counter
- Count recording equipment: model RAD-C, manufactured by Rigaku Corporation

(4) Degree of heat shrinkage after 10-minute heat treatment at 130°C

Five polypropylene specimens each having a width of 10 mm and a length (measuring direction) of 50 mm were cut out in the width direction and in the longitudinal direction, and the position 5 mm away from each end was marked on each specimen to define a test length ($l_0$) of 40 mm. Subsequently, a specimen was sandwiched between paper sheets and, without applying a load, heated for 10 minutes in an oven maintained at 130°C It was then taken out and cool ed at room temperature, followed by measuring the specimen length ($l_1$) and performing calculation by the equation given below. The average of five measurements was adopted to represent the heat shrinkage of the film.

$$\text{Heat shrinkage} = \{(l_0 - l_1) / l_0\} \times 100\ (\%)$$

(5) Dielectric breakdown voltage (V/$\mu$m) of film at 125°C

A film specimen was heated for 1 minute in a heat insulating oven maintained at 125°C and measurements were taken in that atmosphere according to the BMethod (flat plate electrode method) specified in JIS C2330 (2001) 7.4.11.2. For the lower electrode, however, a combination of a metal plate as described for the B -Method specified in JIS C2330 (2001) 7.4.11.2 and a piece of rubber (Conductive Rubber E -100 <65>, manufactured by Togaw a Rubber Co., Ltd.) of the same size carried thereon was used as an electrode for testing. The dielectric breakdown voltage test was conducted 30 times repeatedly and the measurements taken were divided by the thickness of the film (paragraph (1) above) and converted for representation in V/ $\mu$m. From the 30 measurements (calculations), the five largest measurements and the five smallest measurements were excluded, and the average of the remaining 20 measurements was adopted as the film's dielectric breakdown voltage at 125°C.

(6) Glossiness

According to JIS K -7105 (1981), a digital variable glossimeter (UGV -5D, manufactured by Suga Test Instruments Co., Ltd.) was used under the conditions of an incidence angle of 60° and a light receiving angle of 60° to take five measurements from the surface processed in contact with the casting drum surface, followed by averaging them to provide a value to represent the glossiness (%).

(7) Mesopentad fraction

The polypropylene film was subjected to extraction with n- heptane at 60°C for 2 hours to remove impurities and additives from the polypropylene, followed by drying under reduced pressure at 130°C for 2 hours or more to provide a sample. The sample was dissolved in a solvent and the mesopentad fraction (mmmm) (%) was determined under the following conditions using $^{13}$C-NMR.

Measuring conditions

- Equipment: DRX-500, manufactured by Bruker
- Nucleus for measurement: $^{13}$C nucleus (resonance frequency: 125.8 MHz)
- Measuring concentration: 10 mass%
- Solvent: a solution of benzene and deuterated orthodichlorobenzene mixed at 1:3 (volume ratio)
- Measuring temperature: 130°C
- Spin rotation speed: 12 Hz
- NMR sample tube: 5 mm tube
- Pulse width: 45° (4.5 $\mu$s)
- Pulse repeating time: 10 seconds
- Data point: 64K
- Cumulative number of times of measurement: 10,000
- Measuring mode: complete decoupling

Analysis conditions

Fourier conversion was performed for a LB (line broadening factor) of 1 and the mmmm peak was assumed to correspond to 21.86 ppm. Peak division was performed using WINFIT software (manufactured by Bruker). In this step, peak division was performed from the peak at the highest magnetic field strength as described below. After conducting automatic fitting by use of computer software and optimizing the peak division, the sum of the peak fractions of mmmm was calculated to provide a value to represent the mesopentad fraction (mmmm).

(1) mrrm
(2) (3) rrrm (divided into assumed two peaks)
(4) rrrr
(5) mrmr
(e) mrmm+rmrr
(7) mmrr
(8) rmmr
(9) mmmr
(10) mmmm

The same measuring procedure was repeated five times for the same sample and the mesopentad fraction measurements taken were averaged to provide a value to represent the mesopentad fraction of the sample.

(8) Mesomorphic phase fraction in unstretched sheet (wide angle X-ray diffraction)

An unstretched sheet resulting from the casting step was cut to provide a specimen of 10 mm in the width direction and 20 mm in the longitudinal direction. The specimen was examined at room temperature in the diffraction angle (2θ) range of 5° to 30°. Detailed measuring conditions were as described below.

- Equipment: Nano Viewer (manufactured by Rigaku Corporation)
- Wavelength: 0.15418 nm
- X-ray incident direction: "through" direction (incident perpendicular to film surface)
- Measuring period: 300 seconds

Then, the resulting diffraction profile was processed using a peak separation program to separate it into the three components of mesomorphic phase, $\alpha$ -crystal, and amorphous profiles. The analysis was carried out using the IGOR Pro (Ver. 6) software provided by WaveMetrics, Inc. The following were assumed for performing the analysis.

- Peak shape function: Lorenz function
- Peak positions: amorphous 16.2°, mesomorphic phase 15.0°, 21.0°
  $\alpha$-crystal 14.1°, 16.9°, 18.6°, 21.6°, 21.9°
- Peak half-width: am orphous 8.0, mesomorphic phase (15.0°) 3.5, mesomorphic phase (21.0°) 2.7

The above half -widths of the amorphous and mesomorphic phase peaks are used as constants whereas those for the $\alpha$-crystal peaks are used as variables.

Based on the peak separation results obtained, the areas ($m_{15}$ and $m_{21}$) of the diffraction profiles having mesomorphic phase-attributed peaks at 15° and 21° were calculated, and the areas ($\alpha_{14.1}$, $\alpha_{16.9}$, $\alpha_{18.6}$, $\alpha_{21.6}$, and $\alpha_{21.9}$) of the diffraction profiles having $\alpha$-crystal-attributed peaks at 14.1°, 16.9°, 18.6°, 21.6°, and 21.9° were calculated. The calculations were applied to the equation (3) given below to determine the proportion of the areas of the profile attributed to the mesomorphic phase, which was adopted as the mesomorphic fraction.

$$\text{Mesomorphic fraction (\%)} = 100 \times (m_{15} + m_{21}) / (m_{15} + m_{21} + \alpha_{14.1} + \alpha_{16.9} + \alpha_{18.6} + \alpha_{21.6} + \alpha_{21.9})$$

$$\cdots(3)$$

(9) Static friction coefficient ($\mu s$)

Using a slip tester manufactured by Toyo Seiki Seisaku-sho, Ltd., measurements were taken according to JIS K 7125 (1999) at 25°C and 65%RH. For the measurement, each pair of film strips were aligned in the length direction and stacked by combining surfaces having different features. The same measuring procedure was repeated five times for each sample and the average of the measurements was calculated to represent the static friction coefficient ($\mu s$) of the sample.

(10) Crystallization temperature (Tmc) of Film

In a differential scanning calorimeter (Exstar DSC6220, manufactured by Seiko Instruments Inc.), 3 mg of polypropylene film was heated in a nitrogen atmosphere at 20°C/min from 30°C to 260°C. Then, the sample was maintained at 260°C for 5 minutes and cooled at 20°C/min to 30°C. The temperature of the peak in the heat dissipation curve obtained in this procedure was adopted as the crystallization temperature.

(11) Evaluation of characteristics of film capacitor (voltage resistance and reliability at 115C)

Using a vacuum deposition apparatus manufactured by ULVAC, Inc., aluminum was vacuum deposited on the corona discharge- treated or plasma- treated surface (or, of the two film surfaces, that film surface having the higher wetting tensionin the case where it is not known which is the treated film surface) of the film obtained in each Example and Comparative example described later to deposit a so-called T-type margin pattern having a film resistance of 8 $\Omega$/sq and having a margin in the direction perpendicular to the longitudinal direction, thus providing a reel of metal vapor deposited film having a width of 50 mm.

Then, using this reel, a capacitor element was wound up by an element winding-up machine (KAW-4NHB) manufactured by Kaido Mfg. Co., Ltd., which was then subjected to thermal metal spraying and heat treatment under reduced pressure at a temperature of 125°Cfor 13 hours, followed by attaching lead wires to produce a capacitor element.

Ten capacitor elements thus obtained were adopted and a voltage of 300 VDC was applied to the capacitor elements at a high temperature of 115°C After maintaining the voltage for 10 minutes, the applied voltage was gradually increased in stages at a rate of 50 VDC/min. This step-like heating was repeated to conduct so-called step-up test.

<Element processability>

Evaluation was performed according to the criterion given below. Capacitor elements were prepared as described above and the shape of each element was observed visually.

S: The capacitor element is free of end face film slippage, creases, and deformation and has no adverse influence on the subsequent steps.

A: The capacitor element suffers from slight deformation, but has no significant adverse influence on the subsequent steps.

B: The capacitor element suffers from deformation or creases, and has a significant adverse influence on the subsequent steps.

C: The capacitor element suffers from large deformation or creases, and end face film slippage, and has a significant adverse influence on the subsequent steps.

Capacitor elements ranked as S or A are serviceable. Capacitor elements ranked as B or C are hardly serviceable.

<Voltage resistance>

Changes in electrostatic capacity during this test were measured and plotted on a graph and the voltage at which the electrostatic capacity reached 70% of the initial value was divided by the film thickness (described in paragraph (1) above). The results obtained were used for voltage resistance evaluation, which was performed according to the following criteria.

S: 390 V/$\mu$m or more
A: 350 V/$\mu$m or more and less than 390 V/$\mu$m
B: 310 V/$\mu$m or more and less than 350 V/$\mu$m
C: less than 310 V/$\mu$m
Capacitor elements ranked as S or A are serviceable. Those ranked as B or C cannot serve effectively for practical uses.

<Reliability>

The voltage was increased until the electrostatic capacity decreased to below 8% of the initial value and the capacitor element was disassembled to ex amine the state of destruction, followed by evaluating the reliability according to the following criteria.

S: The element is free of changes in shape and free of observable penetrating destruction.
A: The elementis free of changes in shape, but suffering from penetrating destruction through 10 or less film layers.
B: The element suffers from observable changes in shape or observable penetrating destruction through more than 10 film layers.
C: The element suffers from destruction.

Elements ranked as S are serviceable without problems, and those ranked as A are serviceable under favorable conditions. Those ranked as B or C cannot serve effectively for practical uses.

EXAMPLES

The advantageous effect of the invention is described in more detail below with reference to Examples.

(Example 1)

A polypropylene resin product manufactured by Prime Polymer Co., Ltd. that had a mesopentad fraction of 0.984, a melting point of 167°C, a melt flow rate (MFR) of 2.5 g/10 min, and a cold xylene soluble fraction (CXS) of 1.7 mass% was supplied to an extruder maintained at a temperature of 265°C and melt-extruded at a resin temperature of 265° C from a T-type slit die to provide a sheet. Using an air knife, the molten sheet was brought into close contact with a casting drum maintained at 28°C , thereby cooling and solidifying it to provide an unstretched polypropylene film. Subsequently, the film was sent out to travel on rolls that were temperature-controlled so that the film had a temperature of 30°C while being subjected to rubbing treatment, and a channel type roll brush (material: 6 nylon resin, model: BRUSNER 20-80-150-250, brush fiber diameter: 0.2 mm, brush length: 26.5 mm, roll brush diameter: 80 mm) was pushed up by 3 mm after the face of the brush came in contact with the film surface on the casting drum side. It was rotated at 1,600 rpm by a speed control unit motor in the opposite direction to the traveling of the film to perform rubbing treatment, thus providing an unstretched rubbed film. The unstretched rubbed film was preheated gradually up to 85°C using a group of several rolls and, while being maintained at a temperature of 121°C, it was passed between rolls having different circumferential speeds to achieve 6.1 - fold stretching in the longitudinal direction. Immediately, the film was sent into a tenter where it was stretched 11.0 times in the width direction at a temperature of 161°C , and then subjected to the first stage heat treatment and relaxation treatment step designed for performing heat treatment at 158°C while maintaining 10% relaxation in the width direction, followed by the second stage heat treatment step designed for performing heat treatment at 145°C with the film tensioned by clips in the width direction. Finally, the film was heated at 115°C as the third stage heat treatment step, conveyed out of the tenter, and released from the clips holding the film edges, and then the film surface (the one processed in contact with the casting drum) was subjected to corona discharge treatment in air at an intensity of 25 W·min/m$^2$, and wound up into a film roll having a film layer thickness of 2.9 $\mu$m. The polypropylene film sample prepared in this Example showed film characteristics and capacitor characteristics given in Table 1, indicating that the film was high in capacitor element processability and that the resulting capacitor was high in reliability and voltage resistance.

(Examples 2 to 5)

Except that the temperature of the casting drum working for cooling the melt-extruded sheet, the treatment temperature / shape / material as items of rubbing treatment conditions, the draw ratio used for biaxial stretching, and the heat treatment conditions used for the biaxially stretched sheet were as shown in Table 1, the same procedure as in Example 1 was carried out to prepare a polypropylene film having a thickness of 3.0 $\mu$m in Example 2, a polypropylene film having a thickness of 2.8 $\mu$m in Example 3, a polypropylene film having a thickness of 5.8 $\mu$m in Example 4, and a polypropylene film having a thickness of 2.8 $\mu$m in Example 5. The polypropylene film sample prepared in each Example showed film characteristics and capacitor characteristics as given in Table 1, indicating that the polypropylene film obtained in Example 2 was high in capacitor element processability and the resulting capacitor was practically acceptable in both voltage resistance and reliability. The polypropylene film sample obtained in Example 3 was high in capacitor element processability and the resulting capacitor was high in reliability and voltage resistance. The polypropylene film sample obtained in Example 4 was practically acceptable in capacitor element processability though slightly inferior and the resulting capacitor was also practically acceptable in voltage resistance and reliability. The polypropylene film obtained in Example 5 was high in capacitor element processability and the resulting capacitor was practically acceptable in voltage resistance and reliability.

(Example 6)

A polypropylene resin product manufactured by Prime Polymer Co., Ltd. that had a mesopentad fraction of 0.961, a melting point of 165°C, a melt flow rate (MFR) of 3.8 g/10 min, and a cold xylene soluble fraction (CXS) of 4.5 mass% was adopted and, except that the temperature of the casting drum working for cooling the melt -extruded sheet, the draw ratio used for biaxial stretching, and the heat treatment conditions used for the biaxially stretched sheet were as shown in Table 1, the same procedure as in Example 1 was carried out to prepare a polypropylene film having a thickness of 2.9 $\mu$m in Example 6. The polypropylene film sample prepared in this Example showed film characteristics and capacitor characteristics as given in Table 1, indicating that the film was high in capacitor element processability and the resulting capacitor was practically acceptable in voltage resistance and reliability.

(Comparative examples 1 to 6)

Except that rubbing treatment was omitted and that the draw ratio used for biaxial stretching and the heat treatment conditions used for the biaxially stretched sheet were as shown in Table 1, the same procedure as in Example 1 was carried out to prepare a polypropylene film having a thickness of 3.0 $\mu$m in Comparative examples 1 and 6. The polypropylene film samples prepared in Comparative examples 1 and 6 showed film characteristics and capacitor characteristics as given in Table 1, indicating that the film obtained in Comparative Example 1 was so high in slippage and deformation that it was not practically acceptable in capacitor processability and that the resulting capacitor was practically acceptable in voltage resistance, but found to suffer from penetrating destruction through more than 10 film layers in the element and was not acceptablein reliability. On the other hand, the polypropylene film sample prepared in Comparative example 6 showed very high capacitor processability, but the resulting capacitor was not practically acceptable in voltage resistance and was not acceptable in reliability as suggested by the element breakage taking place in reliability evaluation.

(Comparative example 2)

Except that the draw ratio used for biaxial stretching and the heat treatment conditions used for the biaxially stretched sheet were as shown in Table 1, the same procedure as in Example 1 was carried out to prepare a polypropylene film having a thickness of 15$\mu$m in Comparative examples 2. The polypropylene film sample prepared in this Comparative example showed film characteristics and capacitor characteristics as given in Table 1, indicating that the film was practically acceptable in capacitor processability though slightly inferior, but that the resulting capacitor was low in voltage resistance and found in the reliability evaluation test to suffer from penetrating destruction through more than 10 film layers in the element, showing that it was not acceptable.

(Comparative example 3)

A polypropylene resin product manufactured by Prime Polymer Co., Ltd. that had a mesopentad fraction of 0.958, a melting point of 164°C , a melt flow rate (MFR) of 4.0 g/10 min, and a cold xylene soluble fraction (CXS) of 5.0 mass% was adopted and, except that the temperature of the casting dr um working for cooling the melt -extruded sheet, the draw ratio used for biaxial stretching, and the heat treatment conditions used for the biaxially stretched sheet were as shown in Table 1, the same procedure as in Example 1 was carried out to prepare a polypropylene film having a thickness of 2.9 μm in Comparative example 3. The polypropylene film sample prepared in this Comparative example showed film characteristics and capacitor characteristics as given in Table 1, indicating that the film was high in capacitor processability, but that the resulting capacitor was low in voltage resistance and found in the reliability evaluation test to suffer from element destruction, showing that it was not acceptable.

(Comparative example 4)

A polypropylene resin product manufactured by Prime Polymer Co., Ltd. that had a mesopentad fraction of 0.984, a melting point of 167°C , a melt flow rate (MFR) of 2.5 g/10 min, and a cold xylene soluble fraction (CXS) of 1.7 mass% was blended with 1.0 mass% of a branched-chain polypropylene resin product manufactured by Basell (high melt tension polypropylene, Profax PF-814) and supplied to an extruder at a temperature of 26 0°C and, except that rubbing treatment was omitted and that the temperature of the casting drum working for cooling the melt -extruded sheet, the draw ratio used for biaxial stretching, and the heat treatment conditions used for the biaxially stretched sheet were as shown in Table 1, the same procedure as in Example 1 was carried out to prepare a polypropylene film having a thickness of 3.0 μm in Comparative example 4. The polypropylene film sample prepared in this Comparative example showed film characteristics and capacitor characteristics as given in Table 1, indicating that the film was high in cap acitor processability, but that the resulting capacitor was not acceptable in voltage resistance and found in the reliability evaluation test to suffer from element destruction, showing that it was not acceptable.

(Comparative example 5)

A polypropylene resin product manufactured by Prime Polymer Co., Ltd. that had a mesopentad fraction of 0.961, a melting point of 165°C , and a melt flow rate (MFR) of 3.8 g/10 minutes, and a cold xylene soluble fraction (CXS) of 4.5 mass% and a nonitol type thermofusible nucleating agent, specifically NX8000 α-crystal nucleating agent manufactured by Milliken were extruded from a kneading extruder set up at 240°C so that they would be combined at a ratio of 100 parts by mass to 0.3 part by mass, and the resulting str and was cooled in water and processed into chips, thereby providing a polypropylene resin material (A). Except that the polypropylene resin material (A) was fed to an extruder maintained at a temperature of 260°C, that rubbing treatment was omitted, and that the temperature of the casting drum working for cooling the melt -extruded sheet, the draw ratio used for biaxial stretching, and the heat treatment conditions used for the biaxially stretched sheet were as shown in Table 1, the same procedure as in Example 1 was carried out to prepare a polypropylene film having a thickness of 2.8 μm in Comparative examples 5. The polypropylene film sample prepared in this Comparative example showed film characteristics and capacitor characteristics as given in Table 1, indicating that the film was practically acceptable in capacitor processability though slightly inferior, but that the resulting capacitor was low in voltage resistance and found in the reliability evaluation test to suffer from element destruction, showing that it was not acceptable.

[Table 1]

[Table1]

| | | Example 1 | Example 2 | Example 3 | Example 4 | Example 5 | Example 6 | Comparative example 1 | Comparative example 2 | Comparative example 3 | Comparative example 4 | Comparative example 5 | Comparative example 6 |
|---|---|---|---|---|---|---|---|---|---|---|---|---|---|
| Casting drum temperature | (°C) | 28 | 27 | 27 | 28 | 70 | 25 | 28 | 28 | 94 | 28 | 40 | 90 |
| Mesomorphic fraction in unstretched sheet | (%) | 80 | 81 | 81 | 80 | 21 | 83 | 80 | 80 | 0 | 33 | 0 | 0 |
| Film temperature during rubbing treatment | (°C) | 30 | 30 | 60 | 30 | 30 | 30 | - | 30 | 30 | - | - | - |
| Rubbing treatment conditions | shape | brush | brush | cloth | brush | brush | brush | - | brush | brush | - | - | - |
| | material | 6 nylon | PP | cotton | 6 nylon | 6 nylon | 6 nylon | - | 6 nylon | 6 nylon | - | - | - |
| Longitudinal draw ratio | (ratio) | 6.1 | 6.0 | 5.9 | 5.7 | 6.0 | 5.8 | 5.4 | 4.8 | 4.6 | 6.1 | 4.6 | 6.0 |
| Lateral draw ratio | (ratio) | 11.0 | 11.2 | 11.5 | 10.9 | 11.0 | 11.1 | 10.5 | 10.2 | 10.8 | 10.8 | 10.5 | 10.8 |
| Area draw ratio | (ratio) | 67 | 67 | 68 | 62 | 66 | 64 | 57 | 49 | 50 | 66 | 48 | 65 |
| 1st stage heat treatment temperature | (°C) | 158 | 157 | 158 | 157 | 157 | 158 | 161 | 155 | 155 | 135 | 155 | 135 |
| 2nd stage heat treatment temperature | (°C) | 145 | 138 | 145 | 146 | 145 | 144 | 161 | 140 | 155 | 145 | 155 | 145 |
| 3rd stage heat treatment temperature | (°C) | 115 | 110 | 115 | 114 | 114 | 114 | - | 103 | - | 100 | - | 100 |
| Film thickness | (μm) | 2.9 | 3.0 | 2.8 | 5.8 | 2.8 | 2.9 | 3.0 | 15 | 2.9 | 3.0 | 2.8 | 3.0 |

(continued)

| | | Example 1 | Example 2 | Example 3 | Example 4 | Example 5 | Example 6 | Comparative example 1 | Comparative example 2 | Comparative example 3 | Comparative example 4 | Comparative example 5 | Comparative example 6 |
|---|---|---|---|---|---|---|---|---|---|---|---|---|---|
| JIS-Rz | (nm) | 98 | 368 | 121 | 79 | 409 | 388 | 38 | 225 | 455 | 43 | 387 | 451 |
| Ra | (nm) | 15 | 26 | 18 | 9 | 28 | 27 | 7 | 33 | 63 | 8 | 45 | 61 |
| Rt | (nm) | 123 | 412 | 185 | 119 | 445 | 405 | 45 | 364 | 511 | 49 | 485 | 505 |
| Static friction coefficient (µs) | (-) | 0.72 | 0.68 | 0.70 | 1.10 | 0.69 | 0.70 | 1.55 | 0.92 | 0.62 | 1.15 | 0.65 | 0.62 |
| Film's crystallization temperature (Tmc) | (°C) | 111 | 111 | 111 | 111 | 111 | 110 | 111 | 111 | 110 | 118 | 123 | 111 |
| Crystallite size | (nm) | 10.2 | 10.1 | 10.3 | 11.8 | 12.2 | 11.9 | 10.1 | 12.8 | 13.4 | 12.8 | 13.8 | 12.5 |
| Film's mesopentad fraction | - | 0.981 | 0.981 | 0.981 | 0.981 | 0.981 | 0.958 | 0.981 | 0.981 | 0.955 | 0.983 | 0.958 | 0.981 |
| Film's dielectric breakdown voltage at 125°C | (V/µm) | 583 | 544 | 572 | 555 | 503 | 511 | 521 | 420 | 445 | 533 | 455 | 445 |
| Sum of heat shrinkage in film's longitudinal and width directions (130°C, 10 min) | (%) | 3.6 | 4.2 | 3.8 | 3.4 | 4.1 | 4.6 | 3.4 | 4.2 | 5.1 | 5.2 | 5.1 | 5.1 |
| Glossiness | (%) | 145 | 133 | 138 | 148 | 131 | 134 | 152 | 126 | 128 | 148 | 141 | 128 |
| Capacitor element processability | - | S | S | S | A | S | S | B | A | S | A | A | S |
| Capacitor characteristics at 115°C | voltage resistance | S | A | S | A | A | A | A | C | C | B | C | B |
| | reliability | S | A | S | A | A | A | B | B | C | C | C | C |

**Claims**

1. A polypropylene film having a thickness of 0.5 $\mu$m or more and less than 10 $\mu$m and having a JIS-Rz, Ra, and Rt of 40 to 450 nm, 5 to 30 nm, and 50 to 500 nm, respectively, at least in one direction as determined by cross section analysis based on three dimensional noncontact surface profile measurement (VertSCAN).

2. A polypropylene film as set forth in claim 1, wherein the film has a crystallite size of 12.0 nm or less.

3. A polypropylene film as set forth in either claim 1 or 2, wherein the film has a mesopentad fraction of 0.96 or more.

4. A polypropylene film as set forth in any one of claims 1 to 3, wherein at least either of the film surfaces has a glossiness of 130% or more and less than 150%.

5. A polypropylene film as set forth in any one of claims 1 to 4, wherein sum of heat shrinkage in the longitudinal and width directions of the film heat-treated at 130°C for 10 minute is 5.0% or less.

6. A polypropylene film as set forth in any one of claims 1 to 5 comprising substantially only a polypropylene homopolymer.

7. A method for producing a polypropylene film asset forth in any one of claims 1 to 6 comprising a step for subjecting an unstretched polypropylene film to rubbing treatment and stretching it at a draw ratio of 2 or more at least in one direction.

8. A metal layer laminated film comprising a polypropylene film as set forth in any one of claims 1 to 6 and a metal layer covering at least either of the surfaces thereof.

9. A film capacitor comprising a metal layer laminated film as set forth in claim 8.

## INTERNATIONAL SEARCH REPORT

| International application No. |
|---|
| PCT/JP2018/012346 |

**A. CLASSIFICATION OF SUBJECT MATTER**
Int.Cl. C08J5/18(2006.01)i, B29C55/14(2006.01)i, B32B15/085(2006.01)i, H01G4/18(2006.01)i, H01G4/32(2006.01)i

According to International Patent Classification (IPC) or to both national classification and IPC

**B. FIELDS SEARCHED**

Minimum documentation searched (classification system followed by classification symbols)
Int.Cl. C08J5/18, B29C55/00-30, B32B, H01G4/18, H01G4/32

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2014/142264 A1 (TORAY INDUSTRIES, INC.) 18 September 2014, claims, paragraphs [0013], [0026], [0031], [0034], [0038], [0040], [0078], examples, tables 2, 4 & US 2016/0027581 A1, claims, paragraphs [0015], [0032], [0037], [0042], [0047], [0049], [0131], examples, tables 2, 4 & EP 2975080 A1 & CN 105143320 A | 1-6, 8, 9<br>7 |
| X<br>A | WO 2013/146367 A1 (TORAY INDUSTRIES, INC.) 03 October 2013, claims, paragraphs [0034], [0035], [0041], [0043], [0058], [0064], [ 0109], examples, tables 2-4 & US 2015/0050456 A1, claims, paragraphs [0030], [0031], [0036], [0038], [0053], [0059], [0138], examples, tables 2-4 & EP 2832776 A1 & CN 104204043 A & KR 10-2014-0143185 A | 1-6, 8, 9<br>7 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 June 2018 (18.06.2018) | 26 June 2018 (26.06.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/012346 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | WO 2016/051496 A1 (OJI HOLDINGS CORPORATION) 07 April 2016, claims, paragraphs [0133]-[0136], examples, in particular, example 6, table 2 & US 2017/0229243 A1, claims, paragraphs [0148]-[0151], example 6, table 2 & EP 3202825 A1 & CN 106795300 A & KR 10-2017-0062448 A | 1-6, 8, 9<br>7 |
| X<br>A | JP 2011-122143 A (TORAY INDUSTRIES, INC.) 23 June 2011, claims, comparative examples 3, 4, table 2 (Family: none) | 1, 3, 6, 8, 9<br>2, 4, 5, 7 |
| A | WO 2012/002123 A1 (TORAY INDUSTRIES, INC.) 05 January 2012, entire text & US 2013/0170096 A1 & EP 2590191 A1 & CN 102959656 A & KR 10-2013-0100953 A | 1-9 |
| A | WO 2015/129851 A1 (TORAY INDUSTRIES, INC.) 03 September 2015, entire text & CN 106029754 A & KR 10-2016-0128314 A | 1-9 |
| A | JP 2017-35884 A (TORAY INDUSTRIES, INC.) 16 February 2017, entire text (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016135891 A
- JP 2015201616 A
- JP 2014231584 A
- JP 2014114419 A
- WO 2017022786 A

### Non-patent literature cited in the description

- Firumu Kondensa Yakushin; Kuruma Kara Enerugi E (Remarkable Progress of Film Capacitors; from Automobiles to Energy). **MOTONOBU KAWAI.** Nikkei Electronics. Nikkei Business Publications, 17 September 2012, 57-62